Europäisches Patentamt

European Patent Office

Office européen des brevets

(11) Veröffentlichungsnummer: **0 452 746 A1**

## (12) EUROPÄISCHE PATENTANMELDUNG

(21) Anmeldenummer: **91105401.3**

(22) Anmeldetag: **05.04.91**

(51) Int. Cl.5: **E04F 13/14**, E04F 13/08

(30) Priorität: **19.04.90 DE 4012392**

(43) Veröffentlichungstag der Anmeldung:
**23.10.91 Patentblatt 91/43**

(84) Benannte Vertragsstaaten:
**CH DE FR LI NL**

(71) Anmelder: **VILLEROY & BOCH AG**

**W-6642 Mettlach/Saar(DE)**

(72) Erfinder: **Der Erfinder hat auf seine Nennung verzichtet**

(74) Vertreter: **Bernhardt, Winfrid, Dr.-Ing.**
**Kobenhüttenweg 43**
**W-6600 Saarbrücken(DE)**

(54) **Wandverkleidungselement.**

(57) Ein Wandverkleidungselement besteht aus einer Natursteinplatte (1) und einer mit dieser verklebten keramischen Platte (2).

Zum Anbringen der Befestigungsmittel sind von der Rückseite her in die keramische Platte (2) durchgehende Löcher (4) und im Anschluß an diese hinterschnittene Ausnehmungen (3) in der Natursteinplatte (1) gefräst. Darin sitzen als Befestigungsmittel Hinterschnitt-Dübel (5) mit Spreizkörpern (7).

Die Spreizkörper (7) greifen mit einer Verbreiterung (15) in die Hinterschneidung der Ausnehmung (3) und liegen mit einer Scheibe (6) außen an der keramischen Platte (2) an. Die Natursteinplatte (1) und die keramische Platte (2) sind dadurch über die Verklebung hinaus formschlüssig verbunden.

FIG. 1

Die Erfindung betrifft ein Wandverkleidungselement aus einer Natursteinplatte, die an ihrer Rückseite mit einer keramischen Platte verklebt ist, an deren Rückseite Befestigungsmittel zum Anbringen des Wandverkleidungselementes angeordnet sind, die jeweils durch ein Loch in der keramischen Platte hindurchgreifen und auf der anderen Seite der keramischen Platte in einer rückseitigen Ausnehmung der Natursteinplatte eine Verdickung aufweisen.

Bei einem solchen aus der DE-OS 38 03 739 bekannten Wandverkleidungselement wird die Herstellung des Wandverkleidungselementes aus den beiden Platten benutzt, um vor dem Verkleben der Platten die Befestigungsmittel, z.B. in Form von Hammerkopfschrauben, an der keramischen Platte anzubringen und dann die Natursteinplatte darüberzukleben, wobei die Hammerköpfe o. dgl. in den genannten Ausnehmungen der Natursteinplatte Platz finden.

Der Erfindung liegt die Aufgabe zugrunde, das Wandverkleidungselement weiter zu verfestigen.

Gemäß der Erfindung wird dieser Zweck erfüllt, indem die Ausnehmung in der Natursteinplatte hinterschnitten ist und die Verdickung durch einen formschlüssig in die Ausnehmung greifenden Hinterschnitt-Dübel gebildet ist.

Die Natursteinplatte und die keramische Platte werden auf diese Weise über die Verklebung hinaus auch durch die Dübel zusammengehalten. Die Aufhängung der Natursteinplatte erfolgt dabei nicht nur über die keramische Platte, wie bei dem oben erwähnten bekannten Wandverkleidungselement. Die Natursteinplatte ist hier ebenfalls selbst durch das Befestigungsmittel gehalten.

Nach einer besonders vorteilhaften Weiterbildung der Erfindung liegt der Dübel mit einer, vorzugsweise scheibenförmigen, Verbreiterung an der Rückseite der keramischen Platte an. Dann besteht zwischen der Natursteinplatte und der keramischen Platte unmittelbar voller Formschluß.

Die zwischen dem Dübel und den Wänden der Ausnehmung und des Loches zwangsläufig verbleibenden kleinen Zwischenräume werden vorzugsweise mit einem Kleber ausgefüllt.

Damit wird einerseits Spiel vermieden und andererseits die Kraftübertragung vergleichmäßigt. Ferner wird ein Eindringen von Wasser verhindert.

Die Ausnehmung in der Natursteinplatte und das Loch in der keramischen Platte werden zweckmäßigerweise nach dem Verkleben der beiden Platten in einem Arbeitsgang gefräst.

Abgesehen von der Arbeitsvereinfachung werden damit Passungsungenauigkeiten vermieden; ferner wird die Bruchgefahr bei der Bearbeitung verringert.

Die Platten können verhältnismäßig dünn sein. Die Natursteinplatte kann beispielsweise eine Dicke von 6 bis 12 mm und die keramische Platte eine Dicke von 8 bis 12 mm haben. Vorzugsweise beträgt die Dicke beider Platten etwa 10 mm.

Schließlich wird vorgeschlagen, die Natursteinplatte und die keramische Platte schräg versetzt gegeneinander anzuordnen, so daß jeweils an zwei aneinanderschließenden Seiten des Wandverkleidungselements die Natursteinplatte übersteht und an den anderen beiden Seiten die keramische Platte. Dadurch liegen die etwas unregelmäßigeren Kanten der keramischen Platte immer verdeckt und nur die scharfgeschnittenen Kanten der Natursteinplatte sind sichtbar. Ferner können Verfugungen leichter oder überhaupt erst ausgeführt werden, weil damit das Verfugungsmaterial beim Einbringen hinten gehalten wird.

Die Zeichnung gibt ein Ausführungsbeispiel der Erfindung wieder.

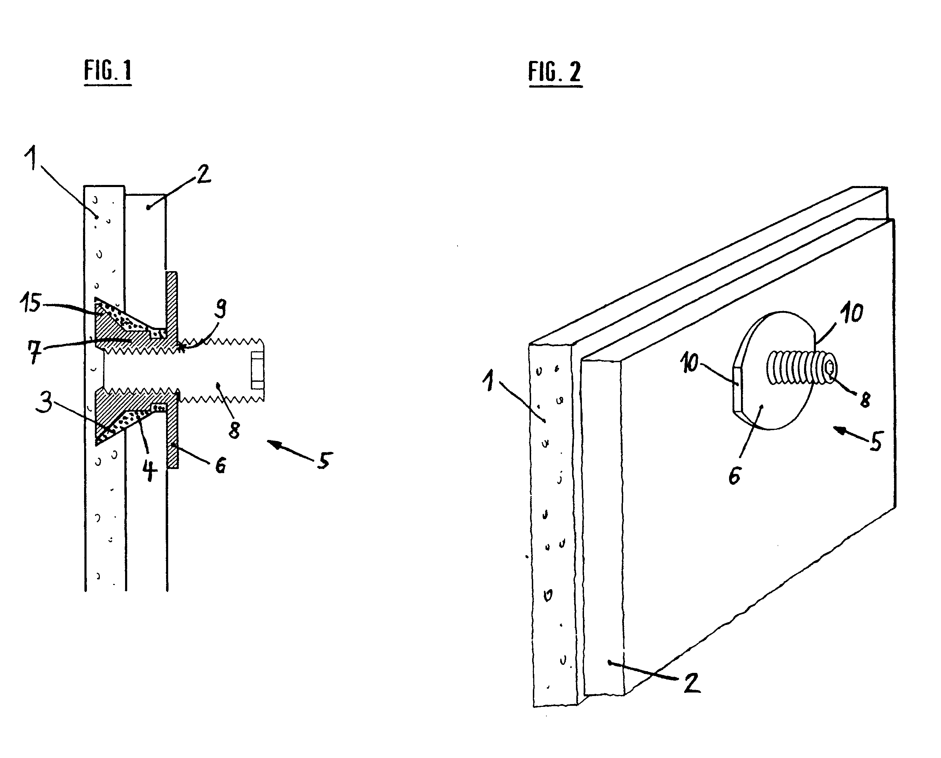

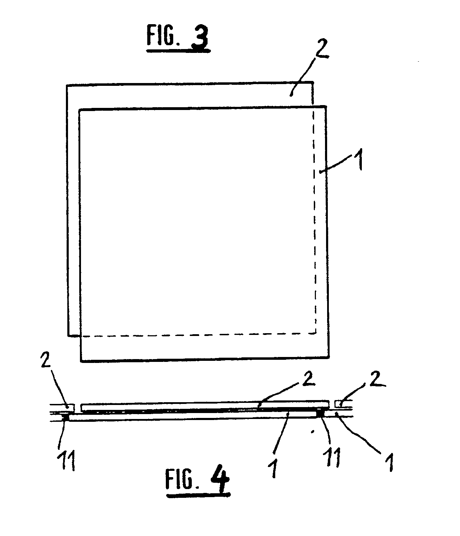

Fig. 1    zeigt einen senkrechten Teilquerschnitt durch ein Wandverkleidungselement nahe seiner einen oberen Ecke,

Fig. 2    zeigt eine perspektivische Ansicht dieser Ecke schräg von hinten,

Fig. 3    zeigt schematisch das Wandverkleidungselement in kleinerem Maßstab von vorne,

Fig. 4    zeigt schematisch das Wandverkleidungselement entsprechend Fig. 3 von oben im Verbund.

Eine Natursteinplatte 1 ist mit einer keramischen Platte 2 verklebt.

Nahe den vier Ecken der beiden Platten sind durch die keramische Platte 2 hindurch hinterschnittene Ausnehmungen 3 kreisförmigen Querschnitts in die Natursteinplatte 1 gefräst. Daß dabei in der keramischen Platte 2 jeweils entstandene durchgehende Loch 4 ist in einem äußeren Abschnitt zylindrisch und in einem inneren Abschnitt in Verlängerung der Hinterschneidung der Ausnehmung 3 gleichfalls hinterschnitten.

In den Löchern 4 und Ausnehmungen 3 sitzt jeweils ein Hinterschnitt-Dübel 5. Dieser Dübel besteht aus einem am Ende sich verbreiternden, mit einer Scheibe 6 an der keramischen Platte 2 anliegenden Spreizkörper 7 und einer Imbusschraube 8, die durch Eintreiben in den Spreizkörper 7 bis zu einem Absatz 9 das in bekannter Weise mit radialen Schlitzen versehene, verbreiterte Ende 15 des Spreizkörpers 7 nach außen in die Hinterschneidung hinein aufgebogen hat. Der von dem Spreizkörper 7 freigelassene Zwischenraum in der Ausnehmung 3 und dem Loch 4 ist mit einem vorher eingebrachten und beim Setzen des Dübels ausgequetschten Zwei-Komponenten-Kleber ausgefüllt.

Zwei Parallelflächen 10 an der Scheibe 6 dienen dazu, beim Eintreiben der Imbusschraube 8 den Spreizkörper 7 mittels eines Schlüssels gegen Drehung zu halten.

Auf den aus dem Spreizkörper 7 herausragenden Schaft der Imbusschraube 8 können in bekannter Weise weitere Befestigungsmittel für das Aufhängen des Wandverkleidungselementes an einer Fassade oder auch im Innenbereich aufgeschraubt werden.

Wie in Fig. 3 und 4 übertrieben dargestellt, sind die Natursteinplatte 1 und die keramische Platte 2 etwa diagonal versetzt. Die Kanten der keramischen Platten 2 sind dadurch verdeckt, und die Fugen zwischen den Natursteinplatten 1 sind hinten abgedeckt und können, wie bei 11 angedeutet, verfugt werden.

**Patentansprüche**

1. Wandverkleidungselement aus einer Natursteinplatte (1), die an ihrer Rückseite mit einer keramischen Platte (2) verklebt ist, an deren Rückseite Befestigungsmittel (5) zum Anbringen des Wandverkleidungselementes angeordnet sind, die jeweils durch ein Loch (4) in der keramischen Platte (2) hindurchgreifen und auf der anderen Seite der keramischen Platte (2) in einer rückseitigen Ausnehmung (3) der Natursteinplatte (1) eine Verdickung (15) aufweisen,
dadurch gekennzeichnet,
daß die Ausnehmung (3) der Natursteinplatte (1) hinterschnitten ist und die Verdickung (15) durch einen formschlüssig in die Ausnehmung (3) greifenden Hinterschnitt-Dübel (5) gebildet ist.

2. Wandverkleidungselement nach Anspruch 1,
dadurch gekennzeichnet,
daß der Dübel (5) mit einer, vorzugsweise scheibenförmigen, Verbreiterung (6) an der Rückseite der keramischen Platte (2) anliegt.

3. Wandverkleidungselement nach Anspruch 1 oder 2,
dadurch gekennzeichnet,
daß zwischen dem Dübel (5) und den Wänden der Ausnehmung (3) und des Loches (4) verbleibenden Zwischenräume mit Kleber gefüllt sind.

4. Wandverkleidungselement nach einem der Ansprüche 1 bis 3,
dadurch gekennzeichnet,
daß die Ausnehmung (3) und das Loch (4) nach Verkleben der Natursteinplatte (1) mit der keramischen Platte (2) gefräst sind.

5. Wandverkleidungselement nach einem der Ansprüche 1 bis 4,
dadurch gekennzeichnet,
daß die Natursteinplatte (1) eine Dicke von 6 bis 12 mm und die keramische Platte (2) eine Dicke von 8 bis 12 mm hat.

6. Wandverkleidungselement nach einem der Ansprüche 1 bis 5,
dadurch gekennzeichnet,
daß die Natursteinplatte (1) und die keramische Platte (2) schräg gegeneinander versetzt sind.

FIG. 1

FIG. 2

EP 0 452 746 A1

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y,D,A | DE-A-3 803 739 (BUCHTAL GMBH)<br>* Spalte 4, Zeile 6 - Zeile 49; Abbildungen 2-6 *<br>– – – | 1,5 | E 04 F 13/14<br>E 04 F 13/08 |
| Y,A | DE-A-3 819 164 (SCHMIDLIN)<br>* Spalte 2, Zeile 55 - Spalte 4, Zeile 10; Abbildungen 10-12 *<br>– – – | 1,2,3 | |
| A | CH-A-6 094 07 (SIMON)<br>* Seite 2, rechte Spalte, Zeile 1 - Seite 3, rechte Spalte, Zeile 18; Abbildungen 1-5 *<br>– – – | 1,3 | |
| A | EP-A-0 320 597 (FISCHER-WERKE ARTUR FISCHER GMBH & CO. KG)<br>* Spalte 1, Zeile 22 - Zeile 29 * * Spalte 2, Zeile 24 - Spalte 3, Zeile 11; Abbildungen 1-4 *<br>– – – | 1,2 | |
| A | FR-A-2 231 829 (PREVITE)<br>* Seite 1, Zeile 11 - Zeile 12 * * Seite 5, Zeile 17 - Seite 10, Zeile 33; Abbildungen 1-18 *<br>– – – – – | 1,6 | |

RECHERCHIERTE SACHGEBIETE (Int. Cl.5)

E 04 F

Der vorliegende Recherchenbericht wurde für alle Patentansprüche erstellt

| Recherchenort | Abschlußdatum der Recherche | Prüfer |
|---|---|---|
| Den Haag | 16 Juli 91 | AYITER J. |